## Europäisches Patentamt
## European Patent Office
## Office européen des brevets

(11) Publication number: **0 037 150 B2**

(12) **NEW EUROPEAN PATENT SPECIFICATION**

(45) Date of publication of the new patent specification:
18.10.89

(21) Application number: **81200330.9**

(22) Date of filing: **25.03.81**

(51) Int. Cl.⁴: **C 08 F 2/24,** C 09 D 7/00

(54) Process for the preparation of polymer dispersions.

(30) Priority: **02.04.80 NL 8001928**

(43) Date of publication of application:
07.10.81 Bulletin 81/40

(45) Publication of the grant of the patent:
07.08.85 Bulletin 85/32

(45) Mention of the opposition decision:
18.10.89 Bulletin 89/42

(84) Designated Contracting States:
AT BE CH DE FR GB IT LI NL SE

(56) References cited:
DE-A- 2 643 145
DE-B- 1 910 532
DE-B- 2 228 515
FR-A- 1 520 906
FR-A- 2 290 454
US-A- 3 202 638

H. Stache "Tensid-Taschenbuch" C. Hanser Verlag
1979, pp.140-147

(73) Proprietor: **DSM RESINS BV, Ceintuurbaan 5,
NL-8022 AW Zwolle (NL)**

(72) Inventor: **Pons, Dick Adriaan, Fazantstraat 55,
NL-3245 CA Maassluis (NL)**
Inventor: **Bijker, Anno, Ottersveen 435, NL-3205 VE
Spijkenisse (NL)**

(74) Representative: **Hoogstraten, Willem Cornelis Roeland
et al, OCTROOIBUREAU DSM Postbus 9, NL-6160 MA
Geleen (NL)**

EP 0 037 150 B2

## Description

The invention relates to a process for the preparation of aqueous polymer dispersions which can for instance be used as paint binders. The invention relates in particular to dispersions of a water-insoluble polymer that can be applied in combination with a polymer soluble in an aqueous alkaline environment.

It is known that an aqueous dispersion of a water-insoluble addition polymer, combined with a polymer that is soluble in an aqueous alkaline environment, can be applied as a binder for gloss paint. The coating obtained is formed substantially by the insoluble polymer. The polymer that is soluble in an alkaline environment ensures good brushability of the system, in particular good flow behaviour, and a good gloss, and is often used as a grinding aid for the pigment to be included in the paint. A disadvantage of the known systems, described in British Patent specification 1 555 517, among others, is that a relatively large quantity of the soluble polymer is required to obtain good brushability, in particular flow. Owing to the presence of comparatively large quantities of alkali-soluble polymer, however, the coating becomes sensitive to moisture penetration, and the alkali resistance and the adhesion to the substrate deteriorate.

The purpose of the invention is an improved aqueous polymer dispersion, in particular a dispersion that can be applied as a binder for gloss paint.

According to the invention an aqueous dispersion of a water-insoluble polymer containing between 0.1 and 5.0 wt%, calculated relative to the total quantity of monomer units in said water-insoluble polymer, of a monomer unit possessing a phosphoric acid, sulphonic acid or carboxylic acid group functioning as emulsifier, in which dispersion there is at least one compound with a polyoxyethylene chain containing between 60 and 400 oxyethylene units, in a quantity of between 0.1 and 10 wt%, calculated relative to the total quantity of monomer units, and chosen from the group consisting of polyethylene glycols, non-ionic or anionic emulsifiers containing a polyoxyethylene chain and non-ionic or anionic copolymerizable emulsifiers containing a polyoxyethylene chain, is mixed with an alkali-soluble polymer, in a ratio such that there is between 1 and 25 wt% alkali-soluble polymer present, calculated relative to the total quantity of polymer.

The invention is based on the fact that at least one monomer built into the polymer contains a stabilizing acid group or an emulsifying group and that there is at least one compound with a long polyoxyethylene chain, i.e. with 60–400 oxyethylene units, present. By this combination, dispersions can be obtained that possess long shelf life and good dispersion flow and good polymer water resistance. These dispersions can in general be applied in coating systems and paints, as additives in construction materials (plaster, cement and concrete mortars), as impregnating agents and adhesives.

The dispersions of the water-insoluble polymer are suitable for applications in which a polymer soluble in a aqueous alkaline environment is added to the dispersion to improve the flow. It is found that only a minor quantity of alkali-soluble polymer is required to obtain a dispersion with good flow properties. Such mixed systems can be used for the aforementioned applications. They are especially suitable for application as lacquers and as binding agents in gloss paints, more specifically air-drying gloss paints.

The coatings thus obtained have a high gloss, adhere well, are re-coatable and well resistant to water and alkali. The paints have good brushability due to their excellent flow.

According to the invention, there should be at least one compound with a long polyoxyethylene chain containing between 60 and 400 oxyethylene units present during polymerization. Henceforth, a polyoxyethylene group with n oxyethylene units will be indicated in complex compounds by ".nEO", as for instance in nonyl phenol .100 EO. The value of n is the actual value, determined by analysis.

Polyethylene glycol with a molecular weight of between about 2600 and 15,000 and preferably between 3500 and 6000 can be used as the compound with the long polyoxyethylene chain, in a quantity of between 0.1 and 5.0 wt.%, calculated relative to the quantity of monomer. In addition to the polyethylene glycol, at least one anionic or non-ionic emulsifier should preferably be used. In addition to the polyethylene glycol, an emulsifier with a long polyoxyethylene chain, optionally copolymerizable, may also be used, Application of polyethylene glycol gives good results, but has the disadvantage that an extra, water-soluble component is added in addition to the emulsifiers. For this reason, a suitable non-ionic or anionic emulsifier is preferably used as compound with a long polyoxyethylene chain.

Non-ionic or anionic non-copolymerizable emulsifiers with a long polyoxyethylene chain can be applied separately or in combination in a quantity of between 0.1 and 10 wt.%, preferably between 0.5 and 7.5 wt.%, and in particular between 1.0 and 5.0 wt.%, calculated relative to the quantity of monomer. The long polyoxyethylene chain contains between 60 and 400 oxyethylene units. The best results as regards the brushability, particularly the flow, of the dispersions and lacquers and paints based thereon are achieved with chains containing 80 to 120 oxyethylene units.

Non-ionic emulsifiers with a long polyoxyethylene chain that can potentially be used include a polyoxyethylated $C_6$–$C_{20}$ alcohol, polyethoxylated phenol-formaldehyde condensates, a polyoxyethylated ($C_4$–$C_{20}$) alkyl phenol, a polyoxyethylene-polyoxy-propylene block copolymer, or an adduct of ethylene oxide and propylene oxide on a polyamine, which adduct contains one or more polyoxyethylene chains. The latter two types of emulsifier should consist of more than 60 wt.%

and preferably at least 80 wt.% of polyoxyethylene chain(s). Examples of suitable emulsifiers are nonyl phenol .80 EO, nonyl phenol .100 EO, decyl .200 EO, nonyl phenol .120 EO, stearyl, .100 EO, n-butyl phenol .100 EO, dodecyl phenol. 150 EO, an ethylene oxide/propylene oxide (80/20) block copolymer with a molecular weight of 8700, an adduct of ethylene oxide and propylene oxide on ethylene diamine consisting to 80 wt.% of oxyethylene units and with a molecular weight of 8000, and other commercially available products. The above-mentioned types of emulsifier are preferably used in combination with a conventional anionic emulsifier containing few or no oxyethylene groups, because polymerization can thus be better controlled.

In general, the sulphonated, phosphated and carboxylated analogues of the above-mentioned non-ionic emulsifiers are potential anionic emulsifiers with a long polyoxyethylene chain, as such or in the form of alkali, ammonium or amine salts.

The carboxylate or phosphate product is preferably used, due to the greater improvement of the flow behaviour. Examples of suitable compounds are lauryl .120 EO phosphate, dodecyl .100 EO phosphate, nonyl .150 EO carboxylate, nonyl phenol .80 EO sulphate, nonyl phenol .100 EO carboxylate, hexyl phenol .120 EO phosphate and analogous compounds.

In addition to the emulsifiers with a long polyoxyethylene chain, other conventional non-ionic or anionic emulsifiers may also be present that contain few or no oxyethylene units. Examples of such non-ionic emulsifiers include nonyl phenol .20 EO, n-butyl phenol .40 EO, lauryl .25 EO and ethylene oxide/propylene oxide block copolymers.

If there is a non-ionic emulsifier with a long polyoxyethylene chain present, it is of advantage to apply in addition an anionic emulsifier containing few or no oxyethylene units. Examples of suitable anionic emulsifiers of this type are di-($C_6$–$C_{12}$ alkyl) sulphosuccinate, dodecyl sulphate, lauryl sulphate, ($C_4$–$C_{20}$ alkyl) benzene sulphonate, nonyl phenol .10 EO sulphate, nonyl .5 EO phosphate, lauryl .10 EO carboxylate, stearyl .4 EO phosphate and n-octyl phosphate. The total quantity of emulsifier is in all cases between 0.1 and 10.0 wt.%, calculated relative to the quantity of monomer.

A copolymerizable emulsifier can also be used as compound with a long polyoxyethylene chain, preferably in a quantity of between 1.0 and 5.0 wt.%, calculated relative to the total quantity of monomer. Examples here are nonyl phenol .100 EO (hydroxyethyl methacrylate) phosphate, lauryl .120 EO (hydroxyethyl methacrylate) phosphate, nonyl phenol .80 EO 2-sulphopropyl maleate, a half-ester of maleic acid or fumaric acid with an ethylene oxide/propylene block copolymer (70% EO, molecular weight 6500), lauryl .90 EO 2-sulphopropyl itaconate, butyl phenol .120 EO methacrylate, and in general esters of a copolymerizable acidic compound with one of the non-ionic emulsifiers with long polyoxyethylene chains summed up above. These copolymerizable emulsifiers, too, should possess a group containing 60–400 oxyethylene units, and preferably 80–120 oxyethylene units.

In addition to the copolymerizable emulsifiers, one or more non-copolymerizable emulsifiers can be used.

In the polymerization there should be present between 0.10 and 5.0 wt.%, calculated relative to the total quantity of monomer, of a copolymerizable emulsifier and/or a copolymerizable emulsion stabilizer possessing a sulphonic acid, phosphoric acid or carboxylic acid group. Here, monomers are taken to mean any unsaturated copolymerizable compounds present. Copolymerizable emulsifiers are known per se. Examples are dodecyl-2-sulphopropyl itaconate, dodecyl-2-sulphopropyl maleate, the alkali salts, ammonium salts, amine salts thereof, and the phosphates described in U.S. Patent 4 101 490, such as dodecyl (hydroxyethyl acrylate) phosphate, polyoxyethylene nonyl phenol (hydroxypropyl methacrylate) phosphate or lauryl (hydroxyethyl methacrylate) phosphate. The copolymerizable emulsifiers containing a long polyoxylene chain described elsewhere in the text can also be used. If the copolymerizable emulsifier has a relatively low molecular weight, a quantity of between 0.1 and 1.5 wt.% is preferably used. If the molecular weight is high due to the presence of a large polyoxyethylene group, the quantity preferably used may also be greater, for instance between 1.0 and 4.0 wt.%.

Copolymerizable compounds that contain at least one phosphoric acid or sulphonic acid group and that can function as emulsion stabilizer are also known. Examples are bis-(2-sulphopropyl) itaconate and the corresponding fumarate and maleate, parasulphophenyl methacrylate and salts thereof, 4-sulphobutyl methacrylate, 2-acrylamido 2-methylpropane sulphonic acid and salts thereof, and the mono- and diphosphate esters known from U.S. Patent 4 110 285, such as mono-(2-hydroxypropyl methacrylate) phosphate. The stabilizers may possess a free acid group or a salt derived therefrom. Unsaturated carboxylic acids also exhibit stabilizing activity. Examples of stabilizers containing a carboxylic group are acrylic acid, methacrylic acid, half-esters of maleic acid, fumaric acid, itaconic acid and citraconic acid such as monobutyl maleate, monoethyl itaconate. To have a stabilizing effect, these carboxylic acid monomers must be located in the outer skin of the polymer particles. In connection herewith, carboxylic acid monomers intended as stabilizers should not be added until the end of polymerization. The monomers containing a phosphoric acid or sulphonic acid group may be added arbitrarily in time and are for this reason to be preferred. Monomeric carboxylic acids may, however, also be used for other reasons, for example to improve adhesion or for cross-linking. Insofar as they are added at the start of polymerization or throughout the polymerization, the carboxylic acids are left out of consideration in calculation of the quantity of copolymerizable emulsion stabilizers. The copolymerizable stabilizers are preferably applied in a quantity of between 0.1 and 1.5 wt.%, calculated relative to the quantity of monomer. It is slightly more effective to use copolymerizable emulsifiers than to build in acidic stabilizers, as regards the combination of emulsion stability, lacquer or paint flow and water resistance.

The water-insoluble polymer consists substantially of the usual monomers from the group styrene, acrylates, methacrylates, vinyl esters and vinyl chloride. Also such monomers as acrylamide, N-alkoxymethacryl amide, $\alpha$-methyl styrene, acrylonitrile, ethylene, butadiene, unsaturated carboxylic acids, hydroxyalkyl(meth)acrylates, di-esters of maleic acid and suchlike may be used. Examples of suitable monomers not yet mentioned are methyl methacrylate, ethyl acrylate, butyl acrylate, 2-ethyl hexyl acrylate, dodecyl acrylate, lauryl acrylate, vinyl acetate, vinyl propionate, vinyl benzoate, vinyl versatate, glycidyl methacrylate, dibutyl maleate. A small quantity of a polyfunctional unsaturated compound can also be applied, such as a di-, tri- or tetra(meth)acrylate or a di- or triallyl compound. Examples here are diethylene glycol diacrylate, trimethylol propane trimethylacrylate and propylene glycol diallyl ether. A small quantity of a monomer is also preferably applied to increase adhesion to the substrates, such as N-vinyl pyrrolidone, NN-dimethyl amino-ethanol acrylate, allyl acetoacetate, 2-vinyl pyridine and 4-vinyl pyridine. The weight percentage of these special monomers amounts to 0.2 to 5.0 and preferably 0.5 to 1.5, calculated relative to the total quantity of monomer.

In addition to the emulsifier(s), it is advantageous to apply a small quantity of a protective colloid. Suitable types are hydroxyethyl cellulose, polyvinyl alcohol, vinyl pyrrolidone, homo- and copolymers, acrylamide homo- and copolymers, and methacrylic acid homo- and copolymers. Preferably, 0.1 to 1.50 wt.% protective colloid is applied, calculated relative to the quantity of monomer.

There may also be present in the polymerization mixture a quantity of free polyethylene glycol with a molecular weight of between 1000 and 10,000 in a quantity of at most 25 wt.%, calculated relative to the quantity of emulsifiers containing a long polyoxyethylene chain. At higher levels, the coating gloss decreases pronouncedly. Such relatively minor quantities of polyethylene glycol are often present as a contaminant in commercially available emulsifiers. The total quantity of compounds containing or consisting of a long polyoxyethylene chain should however not exceed 10 wt.% calculated relative to the quantity of monomer.

Polymerization is conducted in the usual way, either continuously or batchwise. A suitable continuous mode of operation is described in British Patent specification 1 220 777. In a batchwise mode of operation, all the components may be added simultaneously, or part of the monomers and, if so desired, the emulsifier(s) and initiators may be added in portions during polymerization. In general, a dispersion is prepared with a solid content of between 30 and 65 wt.%, the mean size of the dispersed particles being between 200 and 1500 nm. The pH of the dispersion is adjusted after the end of polymerization to a value preferably between 7.5 and 9, and most preferably about 8, to increase the stability. Suitable initiators include alkali and ammonium persulphates, organic peroxides and redox systems, for example those with sodium thiosulphate, sodium metabisulphite or sodium formaldehyde sulphoxylate as reducing agent.

To increase the water resistance of the coatings, ammonium salts or amine salts are preferably used instead of alkali salts.

The dispersions of the water-insoluble polymer obtained according to the invention are preferably applied in combination with between 1 and 25 wt.% of the alkali-soluble polymer in an aqueous alkaline (pH about 8) environment. As little as possible soluble polymer will preferably be used, because while it is true that this polymer enhances the flow behaviour and the brushability of the paint, it decreases the water resistance, alkali resistance, adhesion and re-coatability of the coats. Preferably, 3 to 10 wt.% soluble polymer is used. The binding agent system is made by mixing a solution of the alkali-soluble polymer into the dispersion prepared according to the invention. If very little, i.e. less than about 5 wt.%, alkali-soluble polymer is used, it may be added to the dispersion of the insoluble polymer without threatening the shelf life of the dispersion. The commercially available polymers soluble in an alkali environment and described e.g. in British Patent 1 500 513 and U.S. Patent 4 120 841 may be applied. In general, these are copolymers consisting substantially of (meth)acrylates and unsaturated mono- or dicarboxylic acids, for instance of ethyl acrylate or butyl acrylate and (meth)acrylic acid, maleic acid or fumaric acid.

If desired, a second polymer dispersion may also be incorporated in the paint formulation in an amount of say up to 25% by weight of the dispersion according to the invention. This may be a conventional polymer dispersion, e.g. based on acrylic and/for methacrylic esters and/or styrene, serving to lower the price or to influence rheological properties of the paint. The paint formulation may contain further conventional additives such as biocidal agents, anti-foam agents, leveling agents, dispersion aids and the like. High-gloss paints may be prepared by known methods, e.g. by milling the pigment with the water-soluble polymer and adding this dispersion to the polymer dispersion obtained according to the invention.

The invention will be elucidated with reference to the following examples.

Example I

An aqueous dispersion of a water-insoluble polymer was prepared in a reactor provided with a stirrer, inert-gas flushing system, temperature control and reflux cooler. In the reactor, 300 parts water were heated to 80°C, after which 19 parts of a 10 wt.% aqueous solution of ammonium persulphate was added. Immediately afterwards, metering-in of a specially prepared pre-emulsion was stated.

The pre-emulsion consist of:

492 parts water
10 parts methacrylic acid
480 parts butyl acrylate
510 parts methyl methacrylate
37 parts nonyl phenol .10 EO ("long" nonionic emulsifier)
8 parts nonyl phenol .5 EO-phosphate (anionic emulsifier)
5 parts mono-lauryl-mono(hydroxyethyl methacrylate) phosphate (an emulsifier that can be built in, as per U.S. Patent 4 101 490)
2 parts NN dimethyl ethanol amine.

The pre-emulsion was added over a period of 3.5 hours, the temperature in the reactor being maintained at about 80°C. After this period, the whole system was allowed to continue reacting to a further hour at 85°C. The dispersion was then cooled to 25°C and drained off through a screen. There was barely any coagulation. A milky white dispersion with a solids content of about 56 wt.% was thus obtained. The pH was adjusted to 8. All parts given in this and the following examples are parts by weight.

Examples II–X
By the method described in Example I, dispersions were prepared using 480 parts butyl acrylate, 510 parts methyl methacrylate, 10 parts methacrylic acid and 5 parts lauryl-mono(hydroxyethylmethacrylate) phosphate and various combinations of non-copolymerizable emulsifiers. The quantities and types of emulsifier applied are given below:

Example I
16 parts            sodium lauryl sulphonate
37 parts            nonyl phenol .100 EO

Example III
8 parts            nonyl phenol .5 EO phosphate
37 parts            nonyl phenol .92 EO
5.5 parts         polyethylene glycol mol. wt. 5000

Example IV
16 parts            nonyl phenol .5 EO phosphate
37 parts            polyethylene glycol mol. wt. 6000

Example V
37 parts            nonyl phenol .120 EO
9 parts            lauryl .4 EO

Example VI
8 parts            nonyl phenol .5 EO phosphate
37 parts            nonyl phenol .100 EO mono(hydroxyethyl methacrylate) phosphate, as per U.S. Patent 4 101 490

Example VII
15 parts            nonyl phenol .150 EO

Exemple VIII
8 parts            nonyl phenol .25 EO sulphate
18.5 parts ethylene oxide/propylene oxide block copolymer mol. wt. 8700, with 80 wt.% EO (Pluronic F 68 ex BASF Wyandotte)
18.5 parts ethylene oxide/propylene oxide block copolymer mol. wt. 1900, with 50% EO (Pluronic L 35 ex BASF Wyandotte)

Example IX
8 parts            nonyl phenol .25 EO sulphate
17 parts            nonyl phenol .100 EO
20 parts ethylene oxide/propylene oxide block copolymer mol. wt. 16,300, with 80 wt.% EO (Pluronic F 108 ex BASF Wyandotte)

Example X
8 parts            nonyl phenol .5 EO phosphate
37 parts            $C_{12}$–$C_{13}$ alkanol .120 EO

Examples XI–XV
By the method described in Example I, dispersions were prepared with other types and/or quantities of monomers and emulsifiers. The components applied are given below:

Example XI
480 parts            butyl acrylate
500 parts            methyl methacrylate
10 parts            methacrylic acid
10 parts            glycidyl methacrylate
5 parts lauryl-mono(hydroxyethyl methacrylate) phosphate
8 parts            nonyl phenol .25 EO sulphate
37 parts            nonyl phenol .100 EO

Example XII
560 parts            methyl methacrylate
430 parts            2-ethyl hexyl acrylate
10 parts            methacrylic acid
2.5 parts 2-acryloamido-2 methyl propane sulphonic acid
8 parts            nonyl phenol .25 EO sulphate
37 parts            nonyl phenol .120 EO

Example XIII
480 parts            butyl acrylate
410 parts            methyl methacrylate
100 parts            styrene
10 parts            methacrylic acid
5 parts lauryl-mono(hydroxyethyl methacrylate) phosphate
8 parts            nonyl phenol .100 EO

**Example XIV**

| 350 parts | butyl acrylate |
|---|---|
| 350 parts | methyl methacrylate |
| 300 parts | butyl methacrylate |
| 10 parts | methacrylic acid |
| 5 parts | lauryl-mono(hydroxyethyl methacrylate) phosphate |
| 37 parts | nonyl phenol .100 EO |
| 5 parts | protective colloid (Luriskol K 30) |

**Example XV**

| 440 parts | butyl acrylate |
|---|---|
| 550 parts | methyl methacrylate |
| 10 parts | methacrylic acid |
| 2.5 parts | lauryl-mono(hydroxyethyl methacrylate) phosphate |
| 10 parts | nonyl phenol .25 EO sulphate |
| 35 parts | nonyl phenol .100 EO |

**Comparative Examples A and B**

By the method described in Example I, dispersions were prepared with the types and quantities of monomer quoted therein. Other emulsifiers were, however, used which, contrary to the compositions according to the invention, contained only relatively short polyoxyethylene chains. The emulsifier combinations were:

**Example A**

| 8 parts | nonyl phenol .5 EO phosphate |
|---|---|
| 37 parts | nonyl phenol .50 EO |

**Example B**

| 8 parts | nonyl phenol .5 EO phosphate |
|---|---|
| 37 parts | ethylene oxide/propylene oxide block copolymer, mol. wt. 3500, with 50 wt.% EO (Pluronic P 65 ex BASF Wyandotte). |

**Preparation and study of paints**

Air-drying gloss paints based on the dispersions obtained according to the invention were prepared in the following way.

In a dispersion beaker provided with water-cooling, 22 parts water, 2.5 parts propylene glycol and 6 parts of a dispersion of a polymer soluble in an alkaline environment (commercial product Viscalex VG 2, Allied Colloids) are mixed. Next, 3 parts 25% ammonia are added. Owing to the increased pH, the polymer enters into solution, causing the viscosity of the mixture to increase. Then, 0.5 parts anti-foaming agent, 17.5 parts butyl carbitol, 80 parts titanium dioxide pigment and 80 parts glass beads are added. The mixture is ground in a bead mill for 25 minutes at 2500 revolutions per minute. After cooling, the glass beads are screened off and the paste stirred into the dispersion of the water-insoluble polymer. A paint is thus obtained in which there are 12 parts insoluble polymer (calculated as solid matter) to each of alkali-soluble polymer. The paint is diluted to measure with water and tested in the following manner.

The flow is assessed by applying the paint to glass with a brush. Evaluation runs from 1 (very poor, brush strokes clearly visible) to 5 (excellent, smooth finish under all circumstances).

The gloss is assessed after 7 days, based on the coat applied to the glass.

The re-coatability is assessed by applying to the dry coat another coat 0.075 mm wet thickness with the applicator, allowing this to dry for 24 hours and evaluating as to the combination of gloss, adhesion and swell.

The water resistance is assessed by applying a layer of the paint to be tested with a brush to wood grounded with an alkyd resin and allowing the paint to dry for 16 hours at 25 °C. Drops of water are then applied to the coat and the time is measured until blisters are formed on the coat. Evaluation runs from 1 (very poor, blisters after 1 hour) to 5 (excellent, still no blisters after 6 hours). The adhesion of the coat to the substrate was then investigated.

A number of the dispersions obtained according to the foregoing examples were thus applied in paint. The test results are summarized in Table 1.

Table 1

| Dispersion as per Example | Flow | Gloss | Re-coatability | Water resistance | Adhesion after water resistance |
|---|---|---|---|---|---|
| I | 4 | 90/70 | 5 | 5 | 2 |
| II | 3.5 | 88/75 | 1.5 | 5 | 2 |
| III | 4 | 92/70 | 4 | 5 | 2.5 |
| IV | 3 | 86/50 | 2 | 5 | 4 |
| V | 3.5 | 87/62 | 4.2 | 5 | 3 |
| VI | 3 | 86/50 | 3 | 5 | 3 |
| VII | 3 | 91/55 | 5 | 5 | 5 |
| VIII | 3 | 90/71 | 2.5 | 5 | 2.5 |
| IX | 3 | 88/60 | 3 | 4 | 3 |
| X | 4 | 85/61 | 5 | 5 | 4 |
| XI | 3 | 91/60 | 2 | 5 | 5 |
| XII | 3.5 | 88/54 | 1 | 5 | 3 |
| XIII | 3 | 94/78 | 4.5 | 1.5 | 2 |
| XIV | 3 | 90/60 | 3 | 5 | 3 |

Table 1 (continuation)

| Dispersion as per Example | Flow | Gloss | Re-coatability | Water resistance | Adhesion after water resistance |
|---|---|---|---|---|---|
| XV | 4 | 83/47 | 3 | 5 | 3 |
| A | 1 | 90/50 | 5 | 3 | 2.5 |
| B | 1 | 90/38 | 4 | 1 | 2.5 |

## Claims

1. Process for the preparation of an aqueous polymer dispersion, characterized in that an aqueous dispersion of a water-insoluble polymer containing between 0.1 and 5.0 wt.%, calculated relative to the total quantity of monomer units in the water-insoluble polymer, of a monomer unit possessing a phosphoric acid, sulphonic acid or carboxylic acid group functioning as emulsifier, in which dispersion there is at least one compound with a polyoxyethylene chain containing between 60 and 400 oxyethylene units, in a quantity of between 0.1 and 10 wt.%, calculated relative to the total quantity of monomer units, and chosen from the group consisting of polyethylene glycols, non-ionic or anionic emulsifiers containing a polyoxyethylene chain and non-ionic or anionic copolymerizable emulsifiers containing a polyoxyethylene chain, is mixed with an alkali-soluble polymer, in a ratio such that there is between 1 and 25 wt.% alkali-soluble polymer present, calculated relative to the total quantity of polymer.

2. Process according to claim 1, characterized in that between 3 and 10 wt.% calculated relative to the total quantity of polymer, of alkali-soluble polymer is used.

3. Process according to any of claims 1–2, characterized in that at least one compound with a polyoxyethylene chain containing between 80 and 120 oxyethylene units is used.

4. Process according to any one of claims 1–3, characterized in that between 0.5 and 7.5 wt.% calculated relative to the quantity of monomer, of a non-ionic emulsifier with a polyoxyethylene chain consisting of 60–400 and preferably 80–120 oxyethylene units is used.

5. Process according to claim 4, characterized in that the non-ionic emulsifier is chosen from the group consisting of polyethoxylated $C_6$–$C_{20}$ aliphatic alcohols, polyethoxylated ($C_4$–$C_{20}$ alkyl) phenols, adducts of ethylene oxide and propylene oxide on a polyamide, which adducts consist of more than 60 wt.% of polyoxyethylene chains, and ethylene oxide/propylene oxide block copolymers consisting of more than 60 wt.% of polyoxyethylene chains.

6. Process according to any one of claims 4–5, characterized in that in addition to the non-ionic emulsifier at least one anionic emulsifier is used.

7. Process according to any one of claims 1–2, characterized in that between 0.5 and 7.5 wt.%, calculated relative to the quantity of monomer, of an anionic emulsifier with a polyoxyethylene chain consisting of 60–400 and preferably 80–120 oxyethylene units is used.

8. Process according to any one of claims 6–7, characterized in that the anionic emulsifier is chosen from the group consisting of phosphated, carboxylated or sulphonated derivatives of polyethoxylated $C_6$–$C_{20}$ aliphatic alcohols and polyethoxylated ($C_4$–$C_{20}$ alkyl) phenols, and salts thereof.

9. Process according to claim 8, characterized in that a carboxylate or phosphate is used.

10. Process according to any one of claims 1–2, characterized in that a copolymerizable emulsifier with a polyoxyethylene chain consisting of 60–400 and preferably 80–120 oxyethylene units is applied in a quantity of between 0.5 and 5.0 wt.%, relative to the total quantity of monomers.

11. Process according to any one of claims 1–10, characterized in that between 0.1 and 1.5 wt.% on total monomers of a monomer containing a phosphoric acid or sulphoric acid group is applied.

12. Process according to any one of claims 1–10, characterized in that between 0.1 and 1.5 wt.% on total monomers of a copolymerizable emulsifier other than an emulsifier containing polyoxyalkylene chain having between 60–400 oxyethylene units is used.

13. Paint composition in which an aqueous polymer dispersion prepared according to any one of claims 1–12 is used as binding agent.

## Revendications

1. Procédé pour la préparation d'une dispersion aqueuse d'un polymère, caractérisé en ce que l'on mélange une dispersion aqueuse d'un polymère insoluble dans l'eau contenant entre 0,1 et 5,0% en poids, calculé relativement à la quantité totale des motifs de monomère dans le polymère insoluble dans l'eau, d'un motif de monomère possédant un groupe acide phosphorique, acide sulfonique ou acide carboxylique jouant le rôle d'émulsifiant, dispersion dans laquelle on a au moins un composé ayant une chaîne polyoxyéthylène contenant entre 60 et 400 motifs d'oxyéthylène, en une quantité comprise entre 0,1 et 10% en poids, calculée relativement à la quantité totale des motifs de monomère, choisi dans le groupe constitué par les polyéthylèneglycols, les émulsifiants non ioniques ou anioniques contenant une chaîne polyoxyéthylène et les émulsifiants non ioniques ou anioniques copolymérisables contenant une chaîne polyoxyéthy-